Europäisches Patentamt

European Patent Office

Office européen des brevets

(19)

(11) Publication number : **0 173 422 B1**

(12)                    EUROPEAN PATENT SPECIFICATION

(45) Date of publication of patent specification :
19.10.88

(51) Int. Cl.⁴ : **B 01 D 53/04**

(21) Application number : **85304214.1**

(22) Date of filing : **13.06.85**

(54) **Pressure swing adsorption.**

(30) Priority : **15.06.84 GB 8415285**

(43) Date of publication of application :
**05.03.86 Bulletin 86/10**

(45) Publication of the grant of the patent :
**19.10.88 Bulletin 88/42**

(84) Designated contracting states :
**FR GB IT NL**

(56) References cited :
**EP-A- 0 009 217**
**AU-B-   462 688**

(73) Proprietor : **HOWE-BAKER ENGINEERS INC.**
**P.O. Box 956**
**Tyler Texas 75710 (US)**

(72) Inventor : **Burgess, Kenneth Harold**
**Cherry Trees Westfields**
**Whiteleaf Aylesbury Bucks. HP17 OLH (GB)**
Inventor : **Grover, Clifford John**
**32 Ranleigh Walk**
**Harpenden Herts, AL5 1SR (GB)**

(74) Representative : **Harrison, David Christopher et al**
**MEWBURN ELLIS & CO 2/3 Cursitor Street**
**London EC4A 1BQ (GB)**

EP 0 173 422 B1

## Description

This invention relates to methods of pressure swing adsorption, used in purifying gases and separating gas mixtures.

The basic theory of pressure swing adsorption has been known for many years namely that certain adsorbents will selectively adsorb at high pressure one or more components out of a mixture of gases and will then selectively desorb these components at a low pressure.

In the industrial environment such systems can only be practical if they can be worked continuously and at high efficiency. The capital cost involved in the addition of further vessels is extremely high and not only the plant as a whole but each element of it must be operated at the greatest possible efficiency.

One of the principal problems is how to avoid the losses which would normally occur as a result of the considerable volume of desired product gas trapped in the voids between and inside the adsorbent particles in the beds. The two conventional methods of recovering some of this gas are, first, by pressure equalisation where a first bed at a higher pressure is connected to a second bed at lower pressure and the two are allowed to equalise in pressure, thus saving product gas from the first bed in the second, or, second, by purging between beds, where a first bed at high pressure is allowed to slowly release part of its product gas to a second bed at lower pressure to perform a purging of the second bed.

These ideas have been much developed and complex cycles for the operation of multibed adsorber plants have been seen in for example US-A-31 76 444, US-A-35 64 816, GB-A-15 05 957, US-A-34 30 418 and EP-B-00 09 217. These use multiple equalisations as a principal method of recovering void space gases.

In designing operating cycles for multi-bed systems it is advantageous to have the minimum capital investment and therefore number of adsorbent beds, but to use them in the most efficient way, both in terms of product throughput capacity and in efficiency of recovery of the void space gases. Compromises are inevitable in that for example a greater recovery is yielded by a greater number of equalisations which however requires a larger number of vessels to perform these equalisations ; also better use is made or purging gases when the time available for purge is long.

These operational difficulties have been overcome to some degree by for example incorporating additionnal vessels which have a temporary storage function where essentially pure gas is held originating from a first bed to be later released as at least part of the purge of another bed. Another alternative again in a symmetrical operating cycle, and as shown in GB-A-15 05 957 results in a purge time of only half to a quarter of the associated adsorption period. Another alternative is to add one or more extra adsorber vessels of different size or operating cycle from the other beds (such as in EP-B-00 09 217), having different adsorption times, or different adsorption charge, or both. In effect this bed or these beds is or are being used as temporary operating vessels to enable optimisation of the cycles of the remaining beds, whilst accepting the compromises associated with the additional bed, in terms of capital cost. As a necessary consequence of the resultant asymmetry of operation some of the beds may be purged by gases from more than one bed including the auxiliary bed(s).

The addition of extra vessels and associated capital equipment without proportional improvement in operating efficiency is obviously undesirable.

The present invention realises the ideal of symmetrical cycles for all adsorbers (which may be therefore of identical design, operating time and charge) with a resultant optimisation in the capacity of the adsorbers and of the plant as a whole and this is achieved without substantial increase of cost by increasing the degree of utilisation of the gases within the plant. In the present invention the beds have a cycle which includes both of :

a period when it purges at least one other bed (referred to as a « purge to » period) this period being interrupted by another operation such as an equalisation with a further bed or a cessation of purging, and

a period when it is being purged from at least one other bed (referred to as « purge from ») this period being interrupted either by purging from a further bed or by a cessation of purging.

As will be seen this alteration in the cycles gives the effect that with a given number of adsorber vessels the designer is more able to resolve the compromises of (a) the number of vessels at any one time in the adsorption step as a proportion of the total number available (b) the number of equalisations and (c) the length of purge time (all of which should be maximised) with (d) the number of holding or non-operating steps (which are minimised or eliminated) and (e) the correct order of adsorption equalisation and purge for every adsorber. Purge times for example in a seven bed plant may be increased to over eighty percent of the adsorbing period (against a maximum of fifty percent available in the system of GB-A-15 05 957 for example).

In a preferred sequence of operations in the present invention the « purge to » is twice interrupted by equalisations to different beds respectively ; and the « purge to » period is preceded by a first equalisation to yet a further bed.

In another preferred sequence of operations the « purge from » period is performed with an interruption which is a purging deriving from a bed which at that time is of next higher pressure than the bed which first provided the purging gas in that period ; during that interruption the gas from the bed which first provided the first purging gas is used for a pressure equalisation step in a further bed ; and this bed was immediately-precedingly equalised from the bed providing the purging gas during the interruption.

A first equalisation during an increase in pressure in the bed which has just been purged may be provided by the pressure from the bed providing the purging gas at the end of the purging period.

It can be seen that this system allows a maximum of flexibility of operation according to the number of vessels and the specific response of the adsorbent in relation to the gas being treated.

Particular embodiments of the plant and method will now be described by reference to the accompanying drawings wherein

Figure 1 is a time sequence chart for a seven bed system

Figure 2 shows a pressure-time chart for a given bed or a seven bed system

Figures 3 and 3b show a valving and ducting arrangement for that system and a modification, respectively, and

Figure 4 is a pressure-time chart analogous to Figure 2 but for an eight bed system.

## Example 1

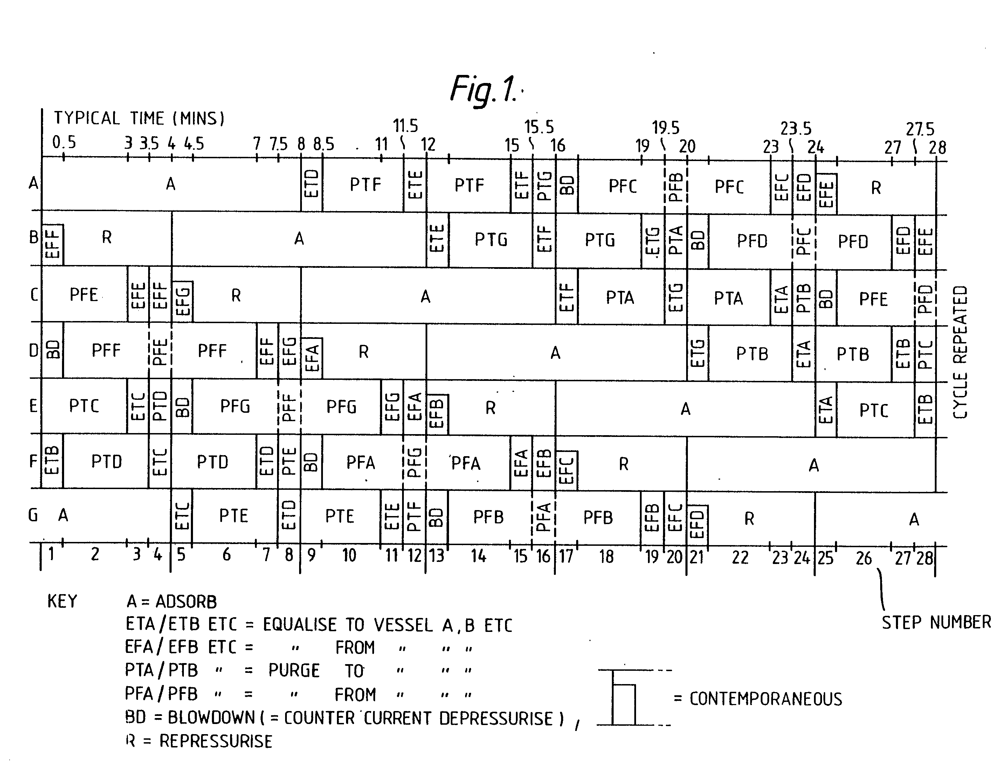

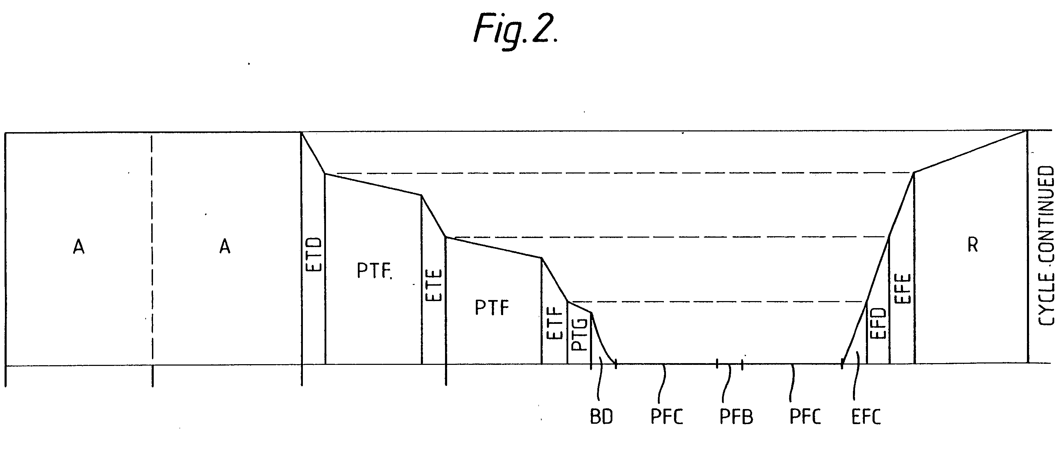

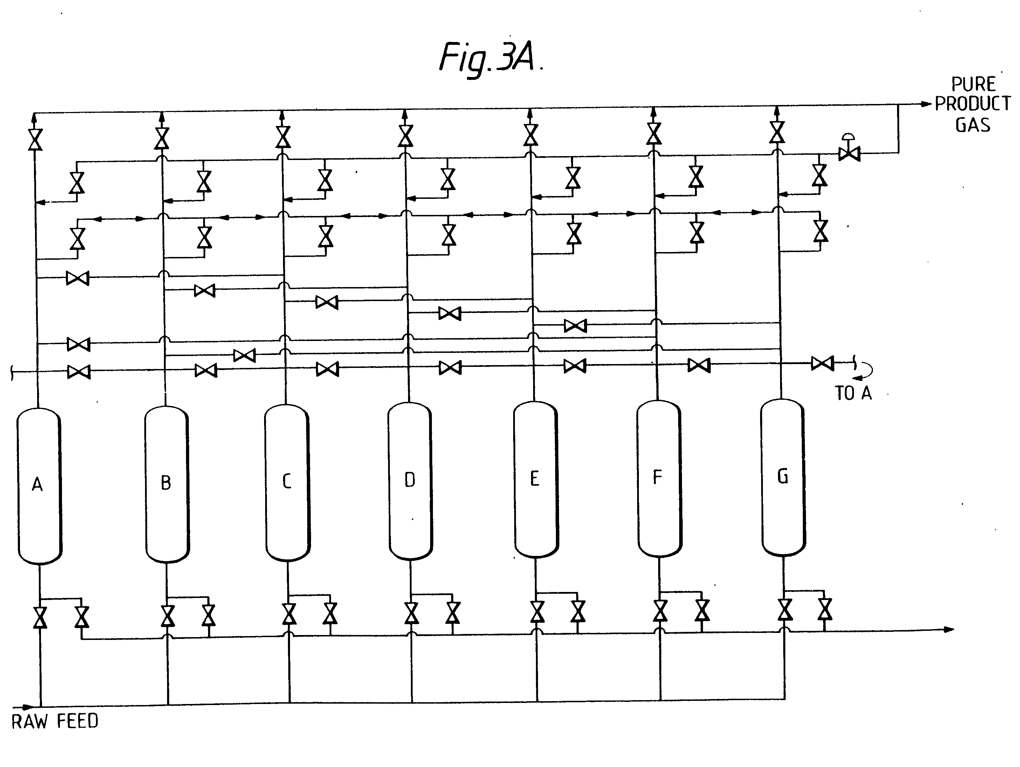

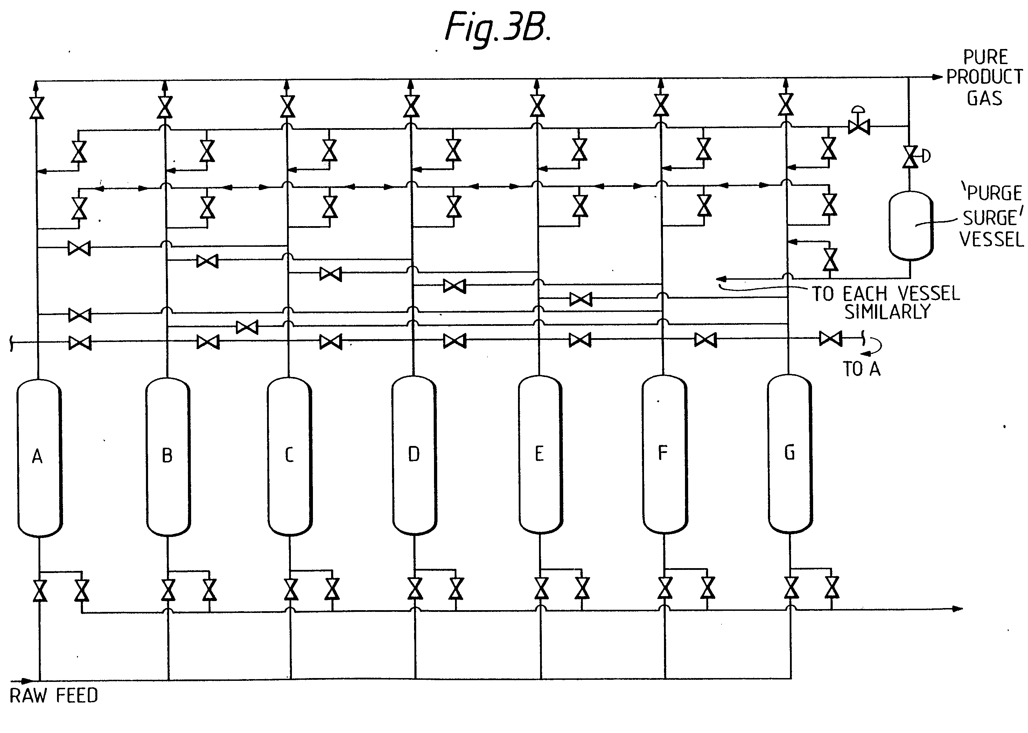

With reference to figures 1, 2 and 3 a seven bed example is shown, in the notation familiar to those acquainted with multibed PSA systems. This will be examined by contrast with the seven bed example of GB-A-15 05 957. The present invention employs an equal number of vessels and equalisations, however, we obtain an improvement by virtue of an increased purge time (in excess of 80 percent of the « adsorb » period), as against only 50 percent. This is achieved by allowing vessel A in step 12 to equalise with vessel E, rather than continue purging vessel F. To maintain purging of vessel F during this period we can utilise vessel G. This enables the maximum utilisation of gas at the pressure most appropriate for the respective steps in the respective vessels. Continuation of purging in step 13 is done in this case from vessel A again, although this is merely an example. In a cycle of a different number of vessels or equalisations, etc, purge could be taken from two, three or more different vessels, or indeed from pure product. In this example also, the intermediate purge of vessel F during step 12 from vessel G could in fact be eliminated. The decision as to whether this is advantageous or disadvantageous depends on the pressures and the nature of the impurity transfer from vessel G to vessel F in step 12. If the pressure of vessel G at the end of step 12 is high enough to prevent excessive migration of impurities into bed F, then it can be used as effective purge. However, if the pressures or desorbates from G are detrimental to efficient purging, the purge step 12 could be excluded, and vessel F would simply experience an interrupted purge. If such an interrupted purge is disadvantageous, but vessel G gas cannot be used because of excessive impurities in it, an extra vessel may be brought in, of a much smaller size than the adsorbers.

This is fed pure produce gas continuously (so as not to disturb the constant product rate) but during step 12 (and, clearly, 16, 20, 24, 28, 4, 8) is opened to perform the intermediate purge.

## Example 2

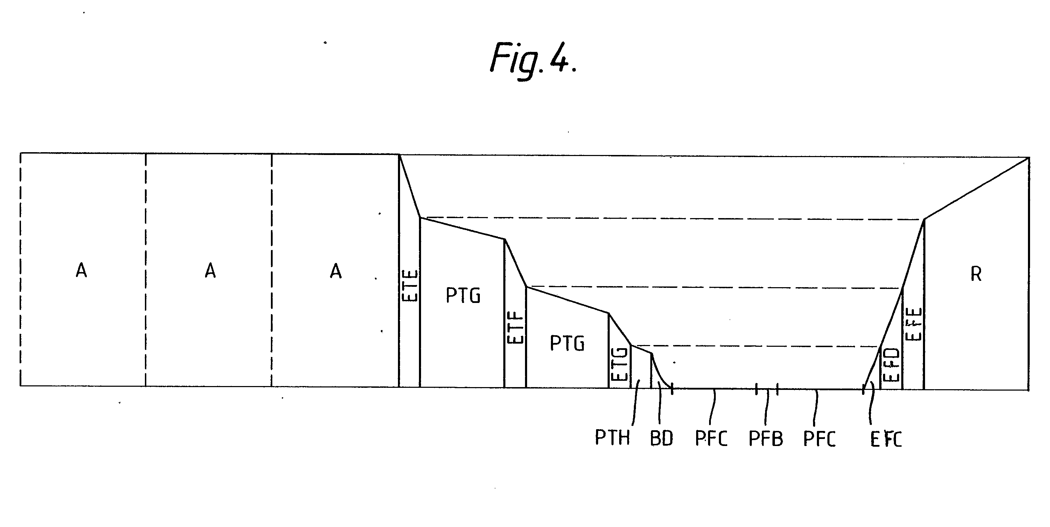

Referring to figure 4 an eight bed example is given. Here the advantage is one more applicable to cases where the purging of adsorbates is easier, since the purge time available is only one-third of the time available for adsorption. However, this system has the advantage of a high throughput capacity, since with a total of only eight vessels, three are utilised at any one step on their adsorption step.

The above examples are only two cycles out of many that could be designed using multiple source and/or interrupted purging, and the spirit and scope of this invention is intended to take in any combination of numbers of vessels, equalisations, purges etc.

## Claims

1. Method of pressure-swing adsorption and desorption using a plurality of adsorber beds, wherein the beds have a cycle which includes both of :

(a) a period when it purges to at least one other bed, this purging including an interrupted period of purging to one bed, and

(b) a period when it is purged from at least one other bed, this purging including an interrupted period of purging from one bed.

2. Method according to claim 1 wherein the period (a) is interrupted by an equalisation to a further bed.

3. Method according to claim 2 wherein the period (a) is twice interrupted, by equalisations to respectively different further beds.

4. Method according to claim 2 or claim 3 wherein the period (a) is preceded by an equalisation to a yet further bed.

5. Method according to claim 1 wherein the period (a) is interrupted by a cessation of purging.

6. Method according to any one of the preceding claims wherein the period (b) is interrupted by purging from a further bed.

7. Method according to claim 6 wherein the period (b) is interrupted by a purging from a bed which at that time is the bed of a next higher pressure than that providing the interrupted purging.

8. Method according to claim 7 wherein gas from the bed providing the interrupted purging is used, during the said interruption, for pressure equalisation in a yet further bed.

9. Method according to claim 8 wherein the yet further bed was, immediately preceding the said equalisation, pressure equalized from the bed providing the purging during the interruption.

10. Method according to any one of claims 1 to 5 wherein the period (b) is interrupted by a cessation of purging.

11. Method according to any one of the preceding claims wherein an initial increase in pressure in a bed the purging of which has just been ended is given by pressure from the bed providing purging gas at the end of that purge.

**Patentansprüche**

1. Druckwechsel-Adsorptions- und -Desorptionsverfahren, bei dem eine Vielzahl von Adsorberbetten (-schichten) verwendet wird, die einen Cyclus aufweisen, der umfaßt :

(a) sowohl eine Periode des Purgierens in mindestens ein anderes Bett (Schicht), das eine unterbrochene Periode des Purgierens in ein Bett einschließt,

(b) als auch eine Periode des Purgierens aus mindesten einem anderen Bett, das eine unterbrochene Periode des Purgierens aus einem Bett einschließt.

2. Verfahren nach Anspruch 1, worin die Periode (a) durch einen Ausgleich in ein weiteres Bett unterbrochen wird.

3. Verfahren nach Anspruch 2, worin die Periode (a) zweimal durch einen Ausgleich in jeweils unterschiedliche weitere Betten unterbrochen wird.

4. Verfahren nach Anspruch 2 oder 3, worin der Periode (a) ein Ausgleich in ein noch weiteres Bett vorgeschaltet wird.

5. Verfahren nach Anspruch 1, worin die Periode (a) durch ein Einstellen des Purgierens unterbrochen wird.

6. Verfahren nach einem der vorhergehenden Ansprüche, worin die Periode (b) durch ein Purgieren aus einem weiteren Bett unterbrochen wird.

7. Verfahren nach Anspruch 6, worin die Periode (b) durch ein Purgieren aus einem Bett unterbrochen wird, das zu diesem Zeitpunkt das Bett mit einem nächsthöheren Druck als dasjenige, welches das unterbrochene Purgieren ergibt, ist.

8. Verfahren nach Anspruch 7, worin das Gas aus dem Bett, welches das unterbrochene Purgieren ergibt, während der Unterbrechung zum Druckausgleich in einem weiteren Bett verwendet wird.

9. Verfahren nach Anspruch 8, worin das weitere Bett unmittelbar vor dem Druckausgleich einem Druckausgleich aus dem Bett, welches das Purgieren während der Unterbrechung ergibt, unterzogen worden ist.

10. Verfahren nach einem der Ansprüche 1 bis 5, worin die Periode (b) durch ein Einstellen des Purgierens unterbrochen wird.

11. Verfahren nach einem der vorhergehenden Ansprüche, worin ein anfänglicher Anstieg des Druckes in einem Bett, dessen Purgieren gerade beendet worden ist, herbeigeführt wird durch den Druck aus dem Bett, welches das Purgiergas ergibt, am Ende des Purgierens.

**Revendications**

1. Procédé d'adsorption et de désorption à oscillation de pression à l'aide d'une pluralité de lits d'adsorption, dans lequel les lits ont un cycle qui comprend à la fois :

(a) une période au cours de laquelle il purge vers au moins un autre lit, cette purge comprenant une période interrompue de purge vers un lit, et

(b) une période au cours de laquelle il est purgé depuis au moins un autre lit, cette purge comprenant une période interrompue de purge depuis un lit.

2. Procédé selon la revendication 1, dans lequel la période (a) est interrompue par une égalisation vers un autre lit.

3. Procédé selon la revendication 2, dans lequel la période (a) est interrompue deux fois, par des égalisations vers respectivement différents autres lits.

4. Procédé selon la revendication 2 ou la revendication 3, dans lequel la période (a) est précédée par une égalisation vers encore un autre lit.

5. Procédé selon la revendication 1, dans lequel la période (a) est interrompue par une interruption de la purge.

6. Procédé selon l'une des revendications précédentes, dans lequel la période (b) est interrompue par une purge depuis un autre lit.

7. Procédé selon la revendication 6, dans lequel la période (b) est interrompue par une purge provenant d'un lit qui, à ce moment, est le lit d'une pression juste supérieure à la pression fournissant la purge interrompue.

8. Procédé selon la revendication 7, dans lequel le gaz provenant du lit fournissant la purge interrompue est utilisé, au cours de ladite interruption, pour une égalisation de pression dans encore un autre lit.

9. Procédé selon la revendication 8, dans lequel, immédiatement avant ladite égalisation, l'autre lit a subi une égalisation de pression depuis le lit fournissant la purge au cours de l'interruption.

10. Procédé selon l'une des revendications 1 à 5, dans lequel la période (b) est interrompue par une interruption de purge.

11. Procédé selon l'une des revendications précédentes, dans lequel une augmentation initiale de la pression dans un lit dont la purge vient d'être terminée, est fournie par la pression provenant du lit fournissant le gaz de purge à la fin de cette purge.

## Fig.1.

0 173 422

TYPICAL TIME (MINS)

Time markers: 0.5 · 3 3.5 4 4.5 · 7 7.5 8 8.5 · 11 11.5 12 · 15 15.5 16 · 19 19.5 20 · 23 23.5 24 · 27 27.5 28

**Row A:** A | ETD | PTF | ETE | PTF | ETF | PTG | BD | PFC | PFB | PFC | EFC | EFD | EFE | R

**Row B:** EFF | R | A | ETE | PTG | ETF | PTG | ETG | PTA | BD | PFD | PFC | PFD | EFD | EFE

**Row C:** PFE | EFE | EFF | EFG | R | A | ETF | PTA | ETG | PTA | ETA | PTB | BD | PFE | PFD

**Row D:** BD | PFF | PFE | PFF | EFF | EFG | EFA | R | A | ETG | PTB | ETA | PTB | ETB | PTC

**Row E:** PTC | ETC | PTD | BD | PFG | PFF | PFG | EFG | EFA | EFB | R | A | ETA | PTC | ETB

**Row F:** ETB | PTD | ETC | PTD | ETD | PTE | BD | PFA | PFG | PFA | EFA | EFB | EFC | R | A

**Row G:** A | ETC | PTE | ETD | PTE | ETE | PTF | BD | PFB | PFA | PFB | EFB | EFC | EFD | R | A

Step numbers: 1 2 3 4 5 6 7 8 9 10 11 12 13 14 15 16 17 18 19 20 21 22 23 24 25 26 27 28

CYCLE REPEATED

STEP NUMBER

KEY
A = ADSORB
ETA/ETB ETC = EQUALISE TO VESSEL A,B ETC
EFA/EFB ETC =    "    FROM   "   " "
PTA/PTB  "   = PURGE   TO    "   " "
PFA/PFB  "   =    "    FROM   "   " "
BD = BLOWDOWN ( = COUNTER CURRENT DEPRESSURISE ) ,
R = REPRESSURISE

☐⌐⌐⌐ = CONTEMPORANEOUS

# Fig.2.

0 173 422

A

A

ETD

PTF.

ETE

PTF

ETF

PTG

BD    PFC    PFB    PFC    EFC

EFD

EFE

R

CYCLE CONTINUED

Fig. 3A.

PURE PRODUCT GAS

TO A

RAW FEED

0 173 422

Fig.3B.

PURE PRODUCT GAS

'PURGE SURGE' VESSEL

TO EACH VESSEL SIMILARLY

TO A

A    B    C    D    E    F    G

RAW FEED

0 173 422

Fig.4.